(19) Europäisches Patentamt
European Patent Office
Office européen des brevets

(11) **EP 3 867 684 B1**

(12) **EUROPÄISCHE PATENTSCHRIFT**

(45) Veröffentlichungstag und Bekanntmachung des Hinweises auf die Patenterteilung:
**06.12.2023   Patentblatt 2023/49**

(21) Anmeldenummer: **19800921.9**

(22) Anmeldetag: **18.10.2019**

(51) Internationale Patentklassifikation (IPC):
**G02B 21/02** *(2006.01)*       **G02B 21/34** *(2006.01)*
**G02B 27/00** *(2006.01)*

(52) Gemeinsame Patentklassifikation (CPC):
**G02B 21/02; G02B 21/34; G02B 27/0068**

(86) Internationale Anmeldenummer:
**PCT/EP2019/078326**

(87) Internationale Veröffentlichungsnummer:
**WO 2020/079208 (23.04.2020 Gazette 2020/17)**

(54) **VERFAHREN UND MIKROSKOP ZUR BESTIMMUNG DER DICKE EINES DECK- ODER TRAGGLASES**

METHOD AND MICROSCOPE FOR DETERMINING THE THICKNESS OF A COVER SLIP OR SLIDE

PROCÉDÉ ET MICROSCOPE POUR DÉTERMINER L'ÉPAISSEUR D'UNE LAMELLE COUVRE-OBJET OU PORTE-OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.10.2018   DE 102018126009**

(43) Veröffentlichungstag der Anmeldung:
**25.08.2021   Patentblatt 2021/34**

(73) Patentinhaber: **Leica Microsystems CMS GmbH 35578 Wetzlar (DE)**

(72) Erfinder:
• **WEISS, Alexander
  35440 Linden (DE)**
• **SCHUMANN, Christian
  35423 Lich (DE)**
• **CAPELLMANN, Ronja
  35578 Wetzlar (DE)**

(74) Vertreter: **Schaumburg und Partner Patentanwälte mbB
Mauerkircherstraße 31
81679 München (DE)**

(56) Entgegenhaltungen:
**EP-A1- 1 988 417     US-A1- 2017 013 186**

EP 3 867 684 B1

**Beschreibung**

Die Erfindung betrifft ein Verfahren zur Bestimmung der Dicke eines Deck- oder Tragglases in einem Mikroskop, das ein einem Probenraum zugewandtes Objektiv aufweist, wobei in dem Probenraum zwei optische Medien an zwei entgegengesetzte Oberflächen des Deck- oder Tragglases grenzen und dadurch zwei teilreflektierende Grenzflächen bilden, die in unterschiedlichen Abständen von dem Objektiv angeordnet sind. Die Erfindung betrifft ferner ein Mikroskop mit einer Einrichtung zur Bestimmung der Dicke eines Deck- oder Tragglases.

In einem Mikroskop ist die Abbildung einer Probe üblicherweise durch ein Deckglas beeinflusst, mit dem die Probe bedeckt ist. Er befindet sich in einem Probenraum des Mikroskops, in dem zwei optische Medien von entgegengesetzten Seiten her an das Deckglas grenzen. Diese optischen Medien sind beispielsweise durch ein Immersionsmedium, das sowohl an das Deckglas als auch an das Mikroskopobjektiv grenzt, und ein die Probe umgebendes Einbettmedium gebildet, das an die von dem Objektiv abgewandte Oberfläche des Deckglases grenzt.

Insbesondere im Hinblick auf eine wirksame Korrektion von Abbildungsfehlern ist es wichtig, die Dicke des Deckglases zu kennen, da diese die Länge des optischen Weges bestimmt, den das durch das Objektiv zu erfassende Detektionslicht beim Durchtritt durch das Deckglas durchläuft. So variiert vor allem die sphärische Aberration signifikant in Abhängigkeit der Dicke des Deckglases. Um die Dicke des Deckglases zu berücksichtigen, ist sie deshalb in einer eigens hierfür vorgesehenen Messung zu ermitteln.

Eine solche Dickenmessung ist unter Anwendung eines sogenannten tastenden Verfahrens möglich, wie es in M. Kurt, Die wissenschaftliche und angewandte Photographie, Band 10: Die Mikrophotographie, Seite 171 beschrieben ist. Dieses tastende Verfahren hat jedoch den Nachteil, dass die Probe noch nicht unter dem Deckglas präpariert sein darf, und kommt somit für eine Anwendung innerhalb des Mikroskops selbst nicht in Frage.

Eine ebenfalls außerhalb des Mikroskops durchgeführte Dickenmessung ist mit Hilfe eines Interferometers möglich. Die Verwendung eines Interferometers ist jedoch mit zusätzlichen Kosten verbunden.

Ein Messverfahren, bei dem die Dicke des Deckglases innerhalb des Mikroskops ermittelt wird, ist aus M. Kurt, Die wissenschaftliche und angewandte Photographie, Band 10: Die Mikrophotographie, Seite 172 bekannt. Bei diesem Verfahren wird im Wechsel auf die Vorderseite und die Rückseite des Deckglases fokussiert, indem der Abstand zwischen Objektiv und Deckglas entsprechend variiert wird. Hierzu wird ein sogenannter z-Trieb verwendet, an dem sich entsprechende Stellwerte ablesen lassen. Anhand der Differenz der abgelesenen Stellwerte lässt sich die optische Dicke des Deckglases bestimmen. Auf Basis der ermittelten optischen Dicke kann dann die mechanische Dicke des Deckglases anhand eines Korrektionsfaktors, der experimentell an anderen Deckgläsern gewonnen wurde, errechnet werden.

Ein Nachteil des vorstehend beschriebenen Messverfahrens besteht darin, dass die Bedienperson auf die Grenzflächen fokussieren muss, die durch die Vorderseite und die Rückseite des Deckglases gebildet sind. Insbesondere bei sauberen Grenzflächen ist eine solche Fokussierung schwierig. Auch ist eine Automatisierung dieses Verfahrens nicht möglich, da die Fokussierung auf die Grenzflächen unter Anwendung eines bildbasierten Autofokus-Verfahrens erfolgen müsste und ein solches Autofokus-Verfahren nicht geeignet ist, die kontrastarmen Grenzflächen des Deckglases, insbesondere dessen Vorderseite vor dem Hintergrund einer kontraststärkeren Probe zu finden. Zudem ist die in diesem vorbekannten Verfahren vorgesehene Umrechnung von der optischen Dicke auf die mechanische Dicke anhand eines experimentell ermittelten Korrektionsfaktors aufwändig und langwierig. Insbesondere muss sie für jedes Objektiv einzeln durchgeführt werden. Somit wäre eine analytische Lösung dieser Umrechnung vorzuziehen.

Aus der Druckschrift EP 1 988 417 A1 ist ein Mikroskop bekannt, bei dem ein Präparat, das aus einer Probenstruktur und einem Deckglas gebildet ist, durch ein Objektiv auf einen Detektor abgebildet wird. Das Deckglas weist zwei entgegengesetzte Glasoberflächen auf. An eine dieser Oberflächen, die dem Objektiv zugewandt ist, grenzt Luft an. An die andere Oberfläche, die von dem Objektiv abgewandt ist, grenzt das Probenmedium an. Über eine Lichtquelle wird Messlicht in einen außermittigen Teilbereich der Objektivpupille eingekoppelt, so dass dieses Messlicht unter einem schrägen Einfallswinkel auf das Präparat eingestrahlt wird. Dementsprechend fängt das Objektiv das Licht, das an dem Präparat reflektiert wird, ebenfalls unter einem schrägen Einfallswinkel ein. Diese Reflexionslicht wird dann auf einen Detektor geleitet, um es im Hinblick auf die Dicke des Deckglases auszuwerten. Der Detektor ist aus zwei Teildetektoren gebildet, die den Detektor in zwei Hälften teilen. Die Deckglasdicke wird anhand der Differenz der Intensitäten ermittelt, die mit den beiden Teildetektoren erfasst werden. Zunächst wird das Objektiv auf die Luft zugewandte Oberfläche des Deckglases fokussiert. Anschließend wird das Objektiv auf die dem Probenmedium zugewandte Oberfläche des Deckglases fokussiert und aus der ermittelten Schrittzahldifferenz eines Schrittmotors die Deckglasdicke bestimmt.

In der Druckschrift US 2017/013186 A1 ist ein Autofokussystem beschrieben, das einen CCD-Sensor als positionssensitiven Detektor einsetzt. Das Autofokussystem wird auf Basis einer Auswertung von Bildern gesteuert, die nacheinander für unterschiedliche Objektivfokussierungen auf dem CCD-Sensor erzeugt werden.

Aufgabe der Erfindung ist es, ein Verfahren und ein Mikroskop anzugeben, die eine einfache und präzise Bestimmung der Dicke eines Deck- oder Tragglases ermöglichen. Vorteilhafte Weiterbildungen sind jeweils in den abhängigen Ansprüchen angegeben.

Die Erfindung löst diese Aufgabe durch die Gegenstände der unabhängigen Ansprüche.

Das erfindungsgemäße Verfahren dient zur Bestimmung der Dicke eines Deck- oder Tragglases in einem Mikroskop, das ein einem Probenraum zugewandtes Objektiv aufweist, wobei in dem Probenraum zwei optische Medien an zwei entgegengesetzte Oberflächen des Deck- oder Tragglases grenzen und dadurch zwei teilreflektierende Grenzflächen bilden, die in unterschiedlichen Abständen von dem Objektiv angeordnet sind. Bei dem Verfahren wird ein Messlichtbündel durch das Objektiv unter schrägem Einfall auf das Deck- oder Tragglas gelenkt. Es werden zwei räumlich voneinander getrennte Reflexionsbündel erzeugt, indem das Messlichtbündel jeweils zum Teil an den beiden Grenzflächen reflektiert wird. Die beiden Reflexionslichtbündel werden durch das Objektiv empfangen und auf einen positionssensitiven Detektor gelenkt. Die Einfallsorte der beiden Reflexionsbündel auf dem positionssensitiven Detektor werden erfasst. Auf Grundlage der erfassten Einfallsorte der beiden Reflexionsbündel wird die Dicke des Deck- oder Tragglases ermittelt.

Unter Deck- oder Tragglas wird in dieser Anmeldung insbesondere ein eine Probe bedeckendes Deckglas, ein Objektträger, ein Boden einer Petrischale oder ein Boden eines Näpfchens einer Mikrotiterplatte verstanden.

Bei dem erfindungsgemäßen Verfahren ist die ermittelte Dicke des Deck- oder Tragglases durch den Abstand der beiden teilreflektierenden Grenzflächen längs der optischen Achse gegeben. Zur Bestimmung dieses Abstands nutzt das Verfahren die beiden Teilreflektionen, die das unter schrägem Einfall auf das Deck- oder Tragglas gelenkte Messlichtbündel an den beiden Grenzflächen erfährt, die durch die einander entgegengesetzten Oberflächen des Deck- oder Tragglases sowie die daran angrenzenden optischen Medien gebildet sind. Da sich der Brechungsindex des Deck- oder Tragglases von den Brechungsindizes der beiden an ihn grenzenden optischen Medien unterscheidet, tritt an den beiden Grenzflächen jeweils ein Sprung im Brechungsindex auf, der zu den erfindungsgemäß genutzten Teilreflexionen führt. Da die beiden Grenzflächen voneinander beabstandet sind und das Messlichtbündel bezüglich der optischen Achse des Objektivs schräg auf die Grenzflächen fällt, erfolgt eine räumliche Trennung der beiden an den Grenzflächen entstehenden Reflexionslichtbündel. Diese räumliche Trennung spiegelt sich in den Einfallsorten wider, an denen die beiden Reflexionslichtbündel auf den positionssensitiven Detektor treffen. Somit korrelieren die erfassten Einfallsorte der Reflexionsbündel eindeutig mit dem Abstand, den die beiden teilreflektierenden Grenzflächen längs der optischen Achse des Objektivs aufweisen, was zur erfindungsgemäßen Dickenmessung genutzt wird.

Zu beachten ist hierbei, dass bei dem erfindungsgemäßen Verfahren dasjenige der beiden Reflexionslichtbündel, das an der von dem Objektiv abgewandten Grenzfläche entsteht, zunächst das Deck- oder Tragglas selbst durchläuft und an der dann durchlaufenen, dem Objektiv zugewandten Grenzfläche gebrochen wird, bevor es in das Objektiv gelangt. Daraus resultiert eine Fokusverschiebung, was bedeutet, dass die optische Dicke des Deck- oder Tragglases bestimmt wird.

Bei der Erfindung werden die beiden Reflexionslichtbündel gleichzeitig auf den positionssensitiven Detektor gelenkt, und es wird die Dicke des Deck- oder Tragglases anhand des gegenseitigen Abstandes der unterschiedlichen Einfallsorte der beiden Reflexionsbündel ermittelt. Diese Ausführungsform ist insbesondere auf Deck- oder Traggläser ausgelegt, die bezogen auf die Objektivvergrößerung relativ dünn sind. In diesem Fall ist nämlich die räumliche Trennung der beiden Reflexionsbündel entsprechend gering, so dass sich beide gleichzeitig auf dem positionssensitiven Detektor erfassen lassen.

In einer alternativen, von den Ansprüchen nicht umfassten Ausführungsform werden die beiden Reflexionslichtbündel nacheinander auf den positionssensitiven Detektor geleitet. Dies bedeutet, dass zu einem gegebenen Zeitpunkt nur jeweils eines der Reflexionslichtbündel auf dem positionssensitiven Detektor erfasst wird. Eine solche Ausführungsform ist insbesondere auf Deck- oder Traggläser ausgelegt, die bezogen auf die Objektivvergrößerung vergleichsweise dick sind. In diesem Fall ist der gegenseitige Abstand der beiden Grenzflächen, an denen die Reflexionslichtbündel entstehen, so groß, dass die damit einhergehende räumliche Trennung der Reflexionslichtbündel es unmöglich macht, beide Reflexionslichtbündel gleichzeitig auf dem positionssensitiven Detektor zu empfangen.

Werden die beiden Reflexionslichtbündel nacheinander auf den positionssensitiven Detektor geleitet, so ist beispielsweise vorgesehen, den Einfallsort des zuerst auf den positionssensitiven Detektor geleiteten Reflexionslichtbündels zu erfassen, anschließend einen Betriebsparameter des Mikroskops so einzustellen, dass der Einfallsort des nachfolgend auf den positionssensitiven Detektor geleiteten Reflexionslichtbündels mit dem zuvor erfassten Einfallsort übereinstimmt, und dann die Dicke des Deck- oder Tragglases anhand des Betriebsparameters zu ermitteln.

In der vorgenannten Ausführungsform wird vorzugsweise der Abstand zwischen dem Deck- oder Tragglas und dem Objektiv als Betriebsparameter eingestellt. Dieser längs der optischen Achse des Objektivs bemessene Abstand kann beispielsweise über eine geeignete Verstellvorrichtung, etwa einen sogenannten z-Trieb, verändert werden. In diesem Fall ergeben sich zwei Einstellwerte des z-Triebs, aus deren Differenz sich die optische Dicke des Deck- oder Tragglases ermitteln lässt.

Alternativ kann die Position einer in dem Mikroskop vorgesehenen, verschiebbaren Fokussierlinse als Betriebsparameter eingestellt werden. Aus der Positionsänderung dieser verschiebbaren Fokussierlinse kann dann unter Berücksichtigung der optischen Abbildungsverhältnisse die optische Dicke des Deck- oder Tragglases ermittelt werden.

In einer bevorzugten Ausführungsform wird anhand der optischen Dicke eine mechanische Dicke des Deck- oder Tragglases unter Berücksichtigung der Brechungsindizes des Deck- oder Tragglases und des optischen Mediums, das sowohl an das Objektiv als auch an dem Deck- oder Tragglas angrenzt, ermittelt. Das vorgenannte optische Medium ist beispielsweise ein Immersionsmedium, das sich zwischen dem Deck- oder Tragglas und dem Objektiv befindet. Sind die Brechungsindizes des Deck- oder Tragglases und des Immersionsmediums bekannt, so lässt sich die mechanische Dicke des Deck- oder Tragglases auf Basis der zuvor ermittelten optischen Dicke nach der folgenden Beziehung berechnen:

$$d_{mech.} = d_{opt.} \cdot \frac{n_g}{n_{im}} \tag{1}$$

worin $d_{mech}$ die mechanische Dicke, $d_{opt}$ die optische Dicke, $n_g$ den Brechungsindex des Deck- oder Tragglases und $n_{im}$ den Brechungsindex des Immersionsmediums bezeichnet.

Soll die mechanische Dicke des Deck- oder Tragglases besonders präzise ermittelt werden, so wird zusätzlich die numerische Apertur des Messlichtbündels berücksichtigt. Dies erfolgt vorzugsweise gemäß der folgenden Beziehung:

$$d_{mech.} = d_{opt.} \cdot \sqrt{\frac{n_g^2 - NA^2}{n_{im}^2 - NA^2}} \tag{2}$$

worin NA die numerische Apertur des Messlichtbündels bezeichnet.

Die numerische Apertur NA ist gegeben durch das Produkt aus dem Brechungsindex $n_{im}$ des Immersionsmediums und dem Einfallswinkel, unter dem das aus dem Objektiv austretende Messlichtbündel gegenüber der optischen Achse auf das Deck- oder Tragglas fällt. Im Übrigen können in der Berechnung der mechanischen Dicke die üblichen Abbildungsfehler berücksichtigt werden.

In einer weiteren vorteilhaften Ausführung ist vorgesehen, dass durch das Messlichtbündel an den beiden Grenzflächen jeweils ein Messmuster erzeugt wird und dass die beiden Messmuster durch die beiden Reflexionslichtbündel auf den positionssensitiven Detektor abgebildet werden. So ist es beispielsweise möglich, das jeweilige Messmuster in Form eines Bildes einer Spaltblende zu generieren, die Teil der das Messlichtbündel emittierenden Lichtquelle ist oder dieser vorgeordnet ist.

Vorzugsweise wird das jeweilige auf den positionssensitiven Detektor abgebildete Messmuster in Form einer räumlichen Intensitätsverteilung erfasst, aus der der Einfallsort des zugehörigen Reflexionslichtbündels bestimmt wird. Sind die auf dem positionssensitiven Detektor abgebildeten Messmuster beispielsweise durch die Bilder einer Spaltblende gegeben, so erhält man die vorgenannte Intensitätsverteilung, indem das jeweilige Blendenbild auf dem Detektor über eine Richtung integriert wird, die parallel zur Längsausrichtung der Spaltblende liegt. Die auf dem Detektor erfasste Lage des jeweiligen Blendenbildes, die von dem Abstand zwischen der zugehörigen, teilreflektierenden Grenzfläche und dem Objektiv abhängt, spiegelt sich in diesem Fall durch einen in der Intensitätsverteilung auftretenden Peak wider. Die Lage des Blendenbildes lässt sich somit einfach aus der Lage des zugehörigen Peaks ermitteln. Um die Lage des Blendenbildes noch genauer zu erfassen, können geeignete Algorithmen angewandt werden, wie z.B. die Anpassung einer geeigneten Kurvenform, etwa einer Gaußkurve, an den in der Intensitätsverteilung auftretenden Peak.

Vorzugsweise wird das Messlichtbündel in einen Teilbereich einer Eintrittspupille des Objektivs geleitet, der gegenüber der Mitte der Eintrittspupille versetzt ist. Auf diese Weise wird die Eintrittspupille des Objektivs durch das Messlichtbündel dezentral unterleuchtet, wodurch das Messlichtbündel beim Austritt aus dem Objektiv schräg zu dessen optischer Achse gestellt wird. Diese dezentrale Unterleuchtung der Eintrittspupille ermöglicht so auf besonders einfache Weise die gewünschte räumliche Trennung der an den beiden Grenzflächen erzeugten Reflexionslichtbündel. Die Reflexionslichtbündel werden dann vorzugsweise so zurück in das Objektiv geleitet, dass sie in der der Ausbreitungsrichtung des Messlichtbündels entgegengesetzten Richtung einen anderen Teilbereich der Eintrittspupille durchsetzen, der gegenüber dem vorgenannten Teilbereich der Eintrittspupille versetzt ist.

Das erfindungsgemäße Mikroskop umfasst einen Probenraum mit einem transparenten Deck- oder Tragglas und zwei optischen Medien, ein dem Probenraum zugewandtes Objektiv, zwei teilreflektierende Grenzflächen, die in dem Probenraum in unterschiedlichen Abständen von dem Objektiv angeordnet und dadurch gebildet sind, dass die beiden optischen Medien in dem Probenraum an zwei entgegengesetzte Oberflächen des Deck- oder Tragglases grenzen, sowie eine Einrichtung zur Bestimmung der Dicke des Deck- oder Tragglases. Die vorgenannte Einrichtung ist ausgebildet, ein Messlichtbündel durch das Objektiv unter schrägem Einfall auf das Deck- oder Tragglas zu lenken. Die Einrichtung ist ferner ausgebildet, zwei räumlich voneinander getrennte Reflexionslichtbündel zu erzeugen, indem das Messlichtbündel jeweils zum Teil an den beiden Grenzflächen reflektiert wird. Die Einrichtung weist einen positionssensitiven Detektor auf und ist ausgebildet, die beiden Reflexionslichtbündel durch das Objektiv zu empfangen und auf den positionssensitiven Detektor zu leiten. Der positionssensitive Detektor ist ausgebildet, die Einfallsorte der beiden Reflexionslichtbündel zu erfassen. Die Einrichtung umfasst eine Ermittlungseinheit, die ausgebildet ist, auf Grundlage der erfassten Einfallsorte der beiden Reflexionslichtbündel die Dicke des Deck- oder Tragglases zu ermitteln.

Vorzugsweise weist die Einrichtung eine Aperturblende mit einer Blendenöffnung auf, die dezentriert mit Abstand zur optischen Achse des Objektivs angeordnet ist. Die Aperturblende begrenzt den Querschnitt des Messlichtbündels derart, dass Letzteres die Eintrittspupille des Objektivs dezentral unterleuchtet und dadurch schräg zur optischen Achse aus dem Objektiv austritt. Auf diese Weise ist sichergestellt, dass die an den beiden teilreflektierenden Grenzflächen erzeugten Reflexionslichtbündel räumlich voneinander getrennt zurück in das Objektiv geleitet und letztlich auf dem positionssensitiven Detektor an verschiedenen Einfallsorten erfasst werden können. Die dezentrale Unterleuchtung der Eintrittspupille des Objektivs hat ferner den Vorteil, das achsnahe Strahlanteile vermieden werden, die sogenannte Reflexe erste Ordnung verursachen, die am stärksten an den Flächenscheiteln der das Objektiv bildenden Linsen entstehen und das Signal-Rausch-Verhältnis verschlechtern.

In einer bevorzugten Ausführung hat die Einrichtung eine Lichtquelle, die das Messlichtbündel im Infrarot-Wellenlängenbereich emittiert. Dies hat den Vorteil, dass die durch das Messlichtbündel an dem Deck- oder Tragglas erzeugten Messmuster für das menschliche Auge nicht sichtbar sind und somit die Beobachtung der Probe durch das Mikroskop nicht stören. Es ist jedoch ebenso möglich, ein Messlichtbündel im sichtbaren Wellenlängenbereich einzusetzen.

Vorzugsweise ist der positionssensitive Detektor ein Zeilendetektor, der so ausgerichtet ist, dass er die Intensitätsverteilung der beiden Reflexionslichtbündel, welche die beiden Bilder der Messmuster widerspiegelt, in ihrer Gesamtheit erfassen kann. In diesem Fall ist es möglich, die beiden Reflexionslichtbündel gleichzeitig auf dem Detektor zu erfassen und aus dem Abstand, den die Einfallsorte voneinander aufweisen, die Dicke des Deck- oder Tragglases zu ermitteln. Der positionssensitive Detektor kann jedoch auch als Flächendetektor ausgeführt sein, z.B. als zweidimensionale CCD-Kamera.

Vorzugsweise sind die entgegengesetzten Oberflächen des Deck- oder Tragglases planparallel zueinander ausgerichtet.

Die erfindungsgemäße Einrichtung ist aufgrund ihrer vorliegend beschriebenen strukturellen und funktionellen Eigenschaften auch dazu geeignet, in dem Mikroskop als Autofokuseinrichtung genutzt zu werden. Zudem bietet die Einrichtung aufgrund ihrer Eigenschaften die Möglichkeit, neben der Dicke des Deck- oder Tragglases auch andere, die lichtmikroskopische Abbildung beeinflussende Größen zu bestimmen, wie etwa den Brechungsindex des Einbettmediums und/oder die Verkippung des Deck- oder Tragglases.

Die Erfindung ist auf eine Vielzahl von Mikroskoptypen anwendbar, z.B. inverse oder aufrechte Durchlichtmikroskope.

Die Erfindung wird im Folgenden anhand der Figuren erläutert. Darin zeigen:

Fig. 1    eine schematische Darstellung eines inversen Durchlichtmikroskops als erstes Ausführungsbeispiel;

Fig. 2    eine zur Bestimmung der Dicke eines Deck- oder Tragglases bestimmte Einrichtung, die Teil des Mikroskops nach Figur 1 ist;

Fig. 3    eine schematische Darstellung, die einen Probenraum des Mikroskops nach Figur 1 zeigt;

Fig. 4    eine durch einen positionssensitiven Detektor der Einrichtung nach Figur 2 erfassten Intensitätsverteilung;

Fig. 5    ein Flussdiagramm, das eine spezielle Ausführungsform des erfindungsgemäßen Verfahrens zur Bestimmung der Dicke des Deck- oder Tragglases zeigt; und

Fig. 6    eine schematische Darstellung eines aufrechten Durchlichtmikroskops, das ein zweites Ausführungsbeispiel des erfindungsgemäßen Mikroskops bildet.

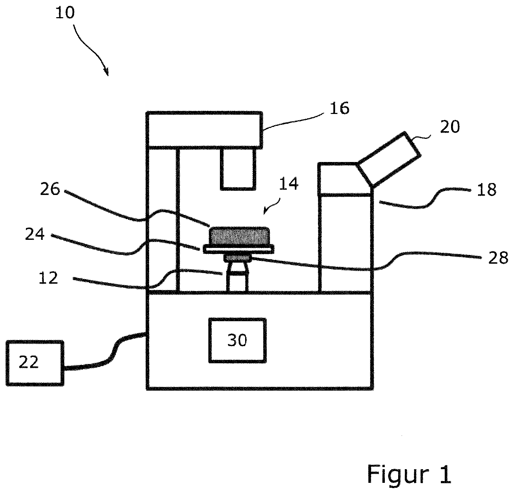

Figur 1 zeigt ein Mikroskop 10 als erstes Ausführungsbeispiel, auf das die erfindungsgemäße Dickenbestimmung anwendbar ist.

Das Mikroskop 10 ist als inverses Durchlichtmikroskop ausgeführt. Es umfasst demnach ein Objektiv 12, das von unten einem in Figur 1 mit 14 bezeichneten Probenraum zugewandt ist, sowie eine Lichtquelle 16, die von oben auf den Probenraum 14 gerichtet ist. Das Mikroskop 10 weist ferner einen Tubus 18 mit einem Okular 20 auf, durch das eine Bedienperson ein durch das Objektiv 12 empfangenes Probenbild betrachten kann. Zudem ist eine Steuereinheit 22 vorgesehen, welche die verschiedenen Mikroskopkomponenten ansteuert.

In dem Probenraum 14 des Mikroskops 10 befindet sich ein Deckglas 24 zum Bedecken einer in Figur 1 nicht explizit dargestellten Probe. Auf dem Deckglas 24 befindet sich ein optisches Medium 26, in das die Probe eingebettet ist und das im Weiteren als Einbettmedium bezeichnet wird. In dem Probenraum 14 ist ferner ein Immersionsmedium 28 angeordnet, das in Figur 1 von oben an das Objektiv 12 und von unten an das Deckglas 24 grenzt.

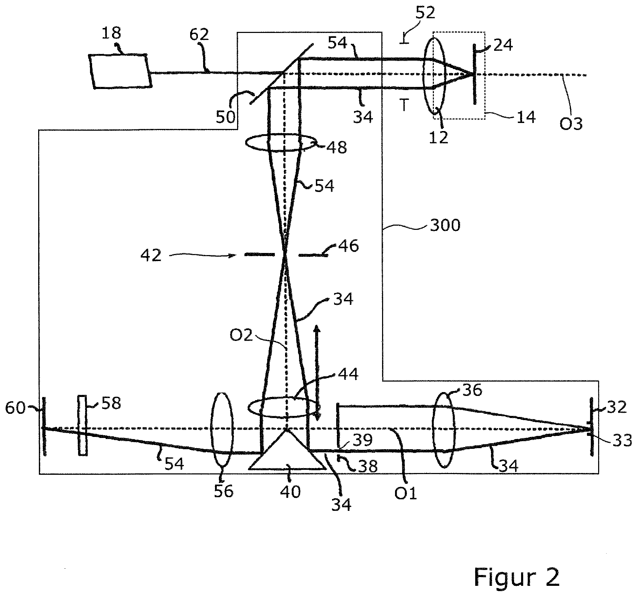

Das Mikroskop 10 weist ferner eine in Figur 1 als allgemein mit dem Bezugszeichen 30 bezeichnete Einrichtung auf, die dazu dient, die Dicke des Deckglases 24 zu ermitteln. Die Einrichtung 30 ist in Figur 2 genauer dargestellt.

Wie in Figur 2 gezeigt, weist die Einrichtung 30 eine Lichtquelle 32 auf, die ein Messlichtbündel 34 im Infrarot-Wellenlängenbereich emittiert. Die Lichtquelle 32 ist beispielweise eine LED, die eine Spaltblende 33 aufweist, durch die das Messlichtbündel 34 auf eine Beleuchtungsoptik 36 gerichtet wird. Nach Durchtritt durch die Beleuchtungsoptik 36 fällt das Messlichtbündel 34 auf eine Aperturblende 38, die zwar mittig auf der optischen Achse O1 der Beleuchtungsoptik 36 positioniert ist, jedoch eine Blendenöffnung 39 aufweist, die dezentriert mit Abstand zur optischen Achse O1 der Beleuchtungsoptik 36 angeordnet ist. Die Blendenöffnung 39 der Aperturblende 38 begrenzt den Strahlquerschnitt des Messlichtbündels 34 derart, dass nur der in Figur 2 unterhalb der optischen Achse O1 der Beleuchtungsoptik 36 liegende Teil des Messlichtbündels 34 die Aperturblende in Richtung eines Umlenkprismas 40 passiert.

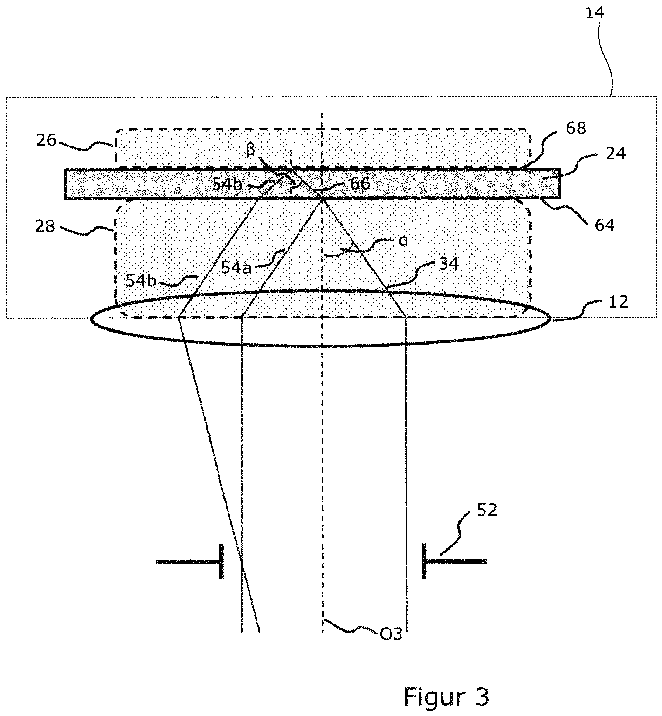

Das in seinem Strahlquerschnitt begrenzte Messlichtbündel 34 wird an dem Umlenkprisma 40 in eine Transportoptik 42 reflektiert, die aus einer längs ihrer optischen Achse O2 verschiebbaren Fokussierlinse 44, einer Streulichtblende 46 und einer weiteren Linse 48 gebildet ist. Nach Durchtritt durch die Transportoptik 42 fällt das Messlichtbündel 34 auf einen dichroitischen Strahlteiler 50, der Licht im Infrarot-Wellenlängenbereich reflektiert, während er Licht im sichtbaren Bereich transmittiert. Durch den dichroitischen Spiegel 50 wird das Messlichtbündel 34 in Richtung des Objektivs 12 reflektiert. Das an dem dichroitischen Spiegel 50 reflektierte Messlichtbündel 34 verläuft dabei mit einem Parallelversatz zur optischen Achse O3 des Objektivs 12. Auf diese Weise wird das Messlichtbündel 34 in einen Teilbereich einer Eintrittspupille 52 des Objektivs 12 geleitet, der gegenüber der optischen Achse O3 des Objektivs 12 und damit gegenüber der Mitte der Eintrittspupille 52 seitlich versetzt ist (vgl. Figur 3). Die Eintrittspupille 52 des Objektivs 12 wird somit dezentral unterleuchtet, was dazu führt, dass das Messlichtbündel 34 unter einem Winkel $\alpha$ schräg zur optischen Achse O3 in den Probenraum 14 gelenkt wird.

Der Einfachheit halber sind in der Darstellung nach Figur 2 das Einbettmedium 26 und das Immersionsmedium 28, die in dem Probenraum 14 von entgegengesetzten Seiten her an das Deckglas 24 grenzen, weggelassen. Das unter schrägem Einfall in den Probenraum 14 geleitete Messlichtbündel 34 wird, wie weiter unten unter Bezugnahme auf Figur 3 genauer erläutert ist, an dem Deckglas 24 reflektiert, wodurch zwei in das Objektiv 12 zurückgeleitete Reflexionsbündel entstehen, die in der schematischen Ansicht nach Figur 2 (im Unterschied zur Detailansicht nach Figur 3) in Form eines einzigen, mit 54 bezeichneten Lichtbündels dargestellt sind.

Nach Durchtritt durch das Objektiv 12 fallen die beiden Reflexionslichtbündel 54 auf den dichroitischen Spiegel 50, der die Reflexionslichtbündel 54 in die Transportoptik 42 lenkt. Nach Passieren der Transportoptik 42 fallen die Reflexionslichtbündel 54 auf das Umlenkprisma 40, das die Reflexionslichtbündel 54 auf eine Detektoroptik 56 reflektiert. Die Detektoroptik 56 richtet die Reflexionslichtbündel 54 auf ein Spektralfilter 58, das nur für Licht im Infrarot-Wellenlängenbereich durchlässig ist und Streulicht außerhalb dieses Wellenlängenbereichs blockiert. Die durch das Spektralfilter 58 transmittierten Reflexionslichtbündel 54 fallen schließlich auf einen positionssensitiven Detektor 60, der im Stande ist, die Intensitäten der Reflexionslichtbündel 54 ortsaufgelöst zu erfassen.

In der Figur 2 ist der Vollständigkeit halber auch die über den dichroitischen Spiegel 50 realisierte Ankopplung des Tubus 18 an die Einrichtung 30 veranschaulicht. Demnach dient der dichroitische Spiegel 50 im vorliegenden Ausführungsbeispiel auch dazu, das für die eigentliche mikroskopische Bildgebung genutzte, sichtbare Detektionslicht 62, welches das Objektiv 12 aus dem Probenraum 14 in Richtung des dichroitischen Spiegels 50 leitet, durch Transmission dem Tubus 18 zuzuführen.

In Figur 3 ist genauer gezeigt, wie durch Reflexion des Messlichtbündels die beiden (in Figur 3 mit 54a und 54b bezeichneten) Reflexionslichtbündel generiert werden, die erfindungsgemäß zur Bestimmung der Dicke des Deckglases 24 genutzt werden. Demnach wird das die Eintrittspupille 52 des Objektivs 12 dezentral unterleuchtende Messlichtbündel 34 durch das Objektiv 12 unter einem Winkel $\alpha$ schräg zur optischen Achse O3 auf die dem Objektiv 12 zugewandte, in Figur 3 mit 64 bezeichnete Vorderfläche des Deckglases 24 gelenkt. Da das Deckglas 24 und das an dessen Vorderfläche 64 grenzende Immersionsmedium 28 unterschiedliche Brechungsindizes aufweisen, bilden die Vorderfläche 64 des Deckglases 24 und das daran angrenzende Immersionsmedium 28 eine erste Grenzfläche, an der das einfallende Messlichtbündel 34 zum Teil reflektiert wird. Der an dieser ersten Grenzfläche reflektierte Teil des Messlichtbündels erzeugt das erste Reflexionslichtbündel 54a, das zurück in das Objektiv 12 geleitet wird.

Der andere Teil 66 des Messlichtbündels 34, der die erste Grenzfläche transmittiert, wird beim Eintritt in das Deckglas 24 von der optischen Achse O3 des Objektivs 12 weggebrochen und schließt mit dieser einen Winkel $\beta$ ein, der größer als der Winkel $\alpha$ ist. Dieser transmittierte Teil 66 des Messlichtbündels 34 wird zum Teil an einer zweiten Grenzfläche reflektiert, die durch die Rückfläche 68 des Deckglases 24 und das daran angrenzende Einbettmedium 26 definiert ist, das einen anderen Brechungsindex als das Deckglas 24 aufweist. Durch diese zweite Teilreflexion des Messlichtbündels 34 an der zweiten Grenzfläche wird das zweite Reflexionslichtbündel 54b erzeugt, das durch die Vorderfläche 64 des Deckglases 24 tritt und dann zurück in das Objektiv 12 gelangt.

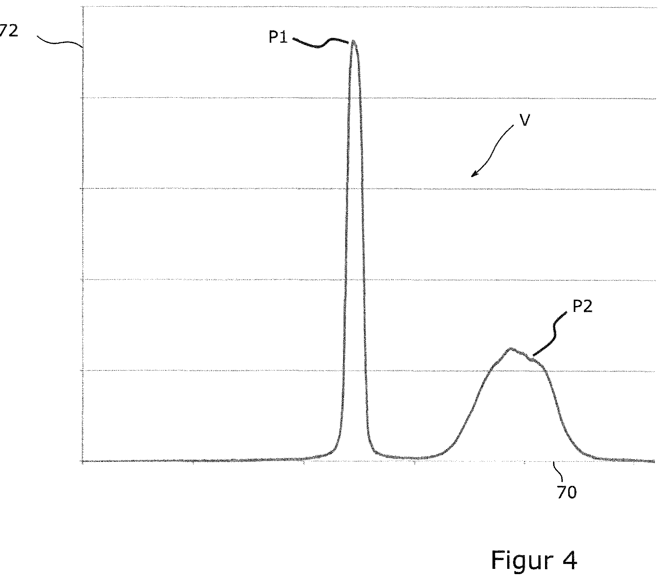

Wie in der Darstellung nach Figur 3 veranschaulicht ist, sorgt der schräge Einfall des Messlichtbündels 34 in den Probenraum 14 dafür, dass die durch die beiden Teilreflexionen an der Vorderfläche 64 bzw. der Rückfläche 68 des Deckglases 24 erzeugten Reflexionslichtbündel 54a, 54b auf unterschiedlichen optischen Wegen zurück in das Objektiv 12 gelangen. Auf diese Weise treffen die beiden Reflexionslichtbündel 54a, 54b an verschiedenen Einfallsorten auf den positionssensitiven Detektor 60, sofern sichergestellt ist, dass beide Reflexionslichtbündel 54a, 54b gleichzeitig auf den Detektor 60 fallen. Mit anderen Worten, werden die beiden an der Vorderfläche 64 bzw. der Rückfläche 68 des Deckglases 24 in Form der Spaltbilder generierten Messmuster räumlich voneinander getrennt auf den positionssensitiven Detektor 60 abgebildet, wie in dem Diagramm nach Figur 4 veranschaulicht ist.

Figur 4 zeigt eine beispielhafte Intensitätsverteilung V, welche die beiden Reflexionslichtbündel 54a, 54b gemeinsam auf dem positionssensitiven Detektor 60 erzeugen. Dabei gibt die Abszisse 70 des Diagramms den Einfallsort auf dem Detektor 60 und die Ordinate 72 die an dem jeweiligen Einfallsort gemessene Intensität wider. Die Intensitätsverteilung V nach Figur 4 zeigt zwei Peaks, von denen der mit P1 bezeichnete Peak dem ersten Reflexionslichtbündel 54a und der mit P2 bezeichnete Peak dem zweiten Reflexionslichtbündel 54b zugeordnet ist. Aus dem Umstand, dass der Peak P1 höher und schärfer als der Peak P2 ist, lässt sich erkennen, dass in dem Beispiel nach Figur 3 das Messlichtbündel 34 auf die Vorderfläche 64 des Deckglases 24 fokussiert ist. Dies bedeutet, dass an der Vorderfläche 64 des Deckglases 24 ein fokussiertes Bild der Spaltblende 33 der Lichtquelle 32 erzeugt wird, während an der Rückfläche 68 des Deckglases 24 ein demgegenüber defokussiertes Bild der Spaltblende 33 entsteht. Dies korrespondiert insoweit mit der Darstellung nach Figur 3, als die erste Teilreflektion an der Vorderfläche 64 des Deckglases 24 an einem Punkt stattfindet, der auf die optische Achse O3 des Objektivs 12 zentriert ist. Demgegenüber findet die zweite Teilreflexion an der Rückfläche 38 des Deckglases 24 an einem hierzu quer zur optischen Achse O3 versetzten Punkt statt. Die Flächen unterhalb der in Figur 4 gezeigten Peaks P1, P2 sind jeweils ein Maß für die Intensität des jeweiligen Reflexionslichtbündels 54a, 54b

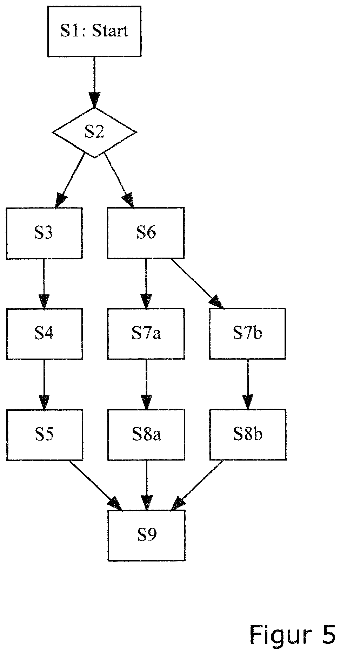

In dem Beispiel nach Figur 4 ist eine Situation gezeigt, in der die beiden Reflexionslichtbündel 54a, 54b gleichzeitig auf den positionssensitiven Detektor 60 fallen. Dies bedeutet, dass die räumliche Aufspaltung der beiden Reflexionslichtbündel 54a, 54b, die mit der Dicke des Deckglases 24 korrespondiert, vergleichsweise gering ist. Mit anderen Worten ist in dem Beispiel nach Figur 4 die zu erfassende Dicke des Deckglases 24 bezogen auf die Objektivvergrößerung relativ gering. Es ist jedoch auch eine Situation denkbar, in der die mit der zu erfassenden Dicke des Deckglases 24 korrespondierende räumliche Aufspaltung der Reflexionslichtbündel 54a, 54b so groß ist, dass eine gleichzeitige Erfassung der beiden Reflexionslichtbündel 54a, 54b durch den positionssensitiven Detektor 60 nicht möglich ist. Im Folgenden wird unter Bezugnahme auf das Flussdiagramm nach Figur 5 deshalb eine Ausführungsform des erfindungsgemäßen Verfahrens erläutert, in dem die beiden vorgenannten Situationen berücksichtigt sind.

Ausgangspunkt des Verfahrens nach Figur 5 ist, dass mindestens eines der beiden Reflexionslichtbündel 54a, 54b, d.h. mindestens eines der beiden Spaltbilder, auf dem positionssensitiven Detektor 60 erfasst wird. Dies lässt sich durch Einstellen eines geeigneten Betriebsparameters erreichen. Beispielsweise kann der Abstand zwischen dem Objektiv 12 und dem Deckglas 24 ausgehend von einem Maximalwert mittels einer Stellvorrichtung, etwa eines z-Triebs, soweit verringert wird, bis ein erstes der beiden Spaltbilder in einer geeigneten Startposition auf dem positionssensitiven Detektor erfasst. Alternativ kann die Position der in der Transportoptik 42 enthaltene Fokussierlinse 44 entsprechend eingestellt werden. Eine geeignete Startposition ist beispielsweise durch einen Einfallsort gegeben, an dem das erste Spaltbild auf dem Detektor 60 vollständig erfassbar ist, sich jedoch möglichst nahe am Rand des wirksamen Erfassungsbereichs des Detektors 60 befindet. Dadurch ist sichergestellt, dass auf dem Detektor 60 möglichst viel Platz für das zu erwartende zweite Spaltbild vorhanden ist. Dieser Ausgangspunkt entspricht in dem Flussdiagramm nach Figur 5 dem Schritt S1.

In Schritt S2 wird die Anzahl der gleichzeitig auf dem Detektor 60 erfassten Spaltbilder ermittelt. Werden in Schritt S2 zwei Spaltbilder erfasst, d.h. neben dem in Schritt S1 eingestellten ersten Spaltbild zusätzlich das zweite Spaltbild, so zweigt das Verfahren zur Schrittfolge S3 bis S5 ab, in der keine weitere Einstellung des oben genannten Betriebsparameters erforderlich ist. Wird dagegen in Schritt S2 nur das erste Spaltbild erfasst, so ist eine Einstellung des Betriebsparameters vorzunehmen, und der Ablauf fährt - je nach Wahl des Betriebsparameters - entweder mit der Schrittfolge S6, S7a, S8a oder mit der der Schrittfolge S6, S7b, S8b fort.

In der Schrittfolge S3 bis S5 wird in S3 zunächst die Lage des ersten Spaltbildes auf dem Detektor bestimmt 60. Nachfolgend wird in Schritt S4 die Lage des zweiten Spaltbildes auf dem Detektor bestimmt. In Schritt S5 wird dann der Abstand der beiden Spaltbilder ermittelt und auf Basis dieses Abstands die optische Dicke des Deckglases 24 unter Berücksichtigung der optischen Abbildungsverhältnisse errechnet.

Auch in Schritt S6 wird zunächst die Lage des ersten Spaltbildes auf dem Detektor 60 bestimmt. In Schritt S7a wird dann der vorliegend gewählte Betriebsparameter variiert, d.h. der Abstand zwischen dem Deckglas 24 und dem Objektiv 12 durch Ansteuern des z-Triebs längs der optischen Achse O3 solange verändert, bis das zweite Spaltbild in der in Schritt S2 festgelegten Startposition erfasst wird. Anschließend wird dann in Schritt S8a die optische Dicke des Deckglases 24 anhand der Differenz der Stellwerte des z-Triebs ermittelt.

Stellt dagegen die Position der Fokussierlinse 44 den zu variierenden Betriebsparameter dar, so wird in Schritt S7b diese Position solange verändert, bis das zweite Spaltbild in der in Schritt S2 festgelegten Startposition erfasst wird. Anschließend wird dann in Schritt S8b die optische Dicke des Deckglases 24 anhand der Differenz der Stellwerte der Positionen der Fokussierlinse 44 unter Berücksichtigung der optischen Abbildungsverhältnisse ermittelt.

In Schritt S9 wird schließlich aus der optischen Dicke des Deckglases, die in Schritt S5, Schritt S8a oder Schritt S8b ermittelt worden ist, gemäß eine der beiden oben angegebenen Beziehungen (1) oder (2) die mechanische Dicke des Deckglases analytisch errechnet.

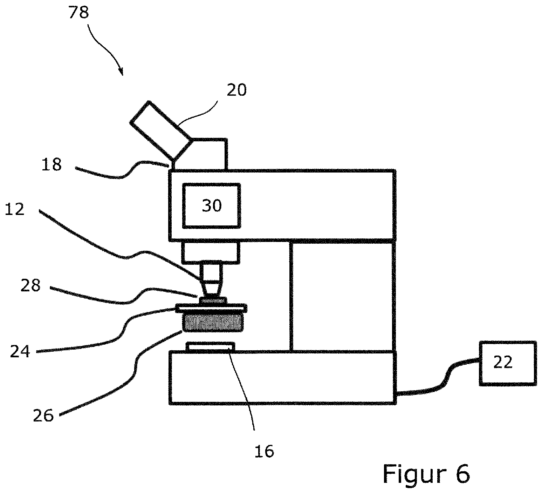

Figur 6 zeigt ein Mikroskop 78, das im Unterschied zu dem in Figur 1 dargestellten Mikroskop 10 als aufrechtes Durchlichtmikroskop ausgeführt ist. Dabei sind in Figur 6 diejenigen Mikroskopkomponenten, die den Komponenten des Mikroskops 10 nach Figur 1 entsprechen, mit den schon in Figur 1 verwendeten Bezugzeichen versehen.

Im Unterschied zur Ausführungsform nach Figur 1 ist bei dem in Figur 6 dargestellten Mikroskop das Objektiv 12 oberhalb des Probenraums 18 angeordnet, während sich die Lichtquelle 16 unterhalb des Probenraums 18 befindet. Dementsprechend befindet sich das Immersionsmedium 28, das zum einen an das Objektiv 12 und zum anderen an das Deckglas 24 grenzt, oberhalb des Deckglases 24, während das Einbettmedium 26, unterhalb des Deckglases 24 angeordnet ist.

Die erfindungsgemäße Bestimmung des Deckglasdicke erfolgt bei dem Mikroskop 78 nach Figur 6 in gleicher Weise wie bei dem in Figur 1 gezeigten Mikroskops 10.

Bezugszeichenliste

| | |
|---|---|
| 10 | Mikroskop |
| 12 | Objektiv |
| 14 | Probenraum |
| 16 | Lichtquelle |
| 18 | Tubus |
| 20 | Okular |
| 22 | Steuereinheit |
| 24 | Deckglas |
| 26, 28 | optisches Medium |
| 30 | Einrichtung |
| 32 | Lichtquelle |
| 33 | Spaltblende |
| 34 | Messlichtbündel |
| 36 | Beleuchtungsoptik |
| 38 | Aperturblende |
| 39 | Blendenöffnung |
| 40 | Umlenkprisma |
| 42 | Transportoptik |
| 44 | Fokussierlinse |
| 46 | Streulichtblende |
| 50 | Strahlteiler |
| 52 | Eintrittspupille |
| 54, 54a, 54b | Reflexionslichtbündel |
| 56 | Detektoroptik |
| 58 | Spektralfilter |
| 60 | Detektor |
| 62 | Abbildungsstrahlengang |
| 64, 68 | Oberfläche |
| 66 | transmittiertes Messlichtbündel |
| 70 | Abszisse |
| 72 | Ordinate |
| O1, O2, O3 | optische Achse |
| P1, P2 | Spitze |
| V | Intensitätsverteilung |
| $\alpha$, $\beta$ | Winkel |

**Patentansprüche**

**1.**    Verfahren zur Bestimmung der Dicke eines Deck- oder Tragglases (24) in einem Mikroskop (10, 78), das ein einem Probenraum (14) zugewandtes Objektiv aufweist,

wobei in dem Probenraum (14) zwei optische Medien (26, 28) an zwei entgegengesetzte Oberflächen (64, 68) des Deck- oder Tragglases (24) grenzen und dadurch zwei teilreflektierende Grenzflächen bilden, die in unterschiedlichen Abständen von dem Objektiv (12) angeordnet sind,

ein Messlichtbündel (34) durch das Objektiv (12) unter schrägem Einfall auf das Deck- oder Tragglas (24) gelenkt wird,

zwei räumlich voneinander getrennte Reflexionslichtbündel (54a, 54b) erzeugt werden, indem das Messlichtbündel (34) jeweils zum Teil an den beiden Grenzflächen reflektiert wird,

die beiden Reflexionslichtbündel (54a, 54b) durch das Objektiv (12) empfangen und auf einen positionssensitiven Detektor (60) geleitet werden,

die Einfallsorte der beiden Reflexionslichtbündel (54a, 54b) auf dem positionssensitiven Detektor (60) erfasst werden, und

auf Grundlage der erfassten Einfallsorte der beiden Reflexionslichtbündel (54a, 54b) die Dicke des Deck- oder Tragglases (24) ermittelt wird,

**dadurch gekennzeichnet, dass** die beiden Reflexionslichtbündel (54a, 54b) gleichzeitig auf den positionssensitiven Detektor (60) geleitet werden und die Dicke des Deck- oder Tragglases (24) anhand des gegenseitigen Abstandes der unterschiedlichen Einfallsorte der beiden Reflexionslichtbündel (54a, 54b) ermittelt wird.

2.  Verfahren nachAnspruch 1, **dadurch gekennzeichnet, dass** die ermittelte Dicke des Deck- oder Tragglases (24) einer optischen Dicke entspricht.

3.  Verfahren nach Anspruch 2, **dadurch gekennzeichnet, dass** anhand der optischen Dicke eine mechanische Dicke des Deck- oder Tragglases (24) unter Berücksichtigung der Brechungsindizes des Deck- oder Tragglases (24) und des optischen Mediums (26), das sowohl an das Objektiv (12) als auch an das Deck- oder Tragglas (24) grenzt, ermittelt wird.

4.  Verfahren nach Anspruch 3, **dadurch gekennzeichnet, dass** die mechanische Dicke des Deck- oder Tragglases (24) zusätzlich unter Berücksichtigung der numerischen Apertur des Messlichtbündels (34) ermittelt wird.

5.  Verfahren nach einem der vorhergehenden Ansprüche, **dadurch gekennzeichnet, dass** durch das Messlichtbündel (34) an den beiden Grenzflächen jeweils ein Messmuster erzeugt wird, das durch das zugehörige Reflexionslichtbündel (54a, 54b) auf den positionssensitiven Detektor (60) abgebildet wird.

6.  Verfahren nach Anspruch 5, **dadurch gekennzeichnet, dass** das jeweilige auf den positionssensitiven Detektor (60) abgebildete Messmuster in Form einer räumlichen Intensitätsverteilung (V) erfasst wird, aus der der Einfallsort des zugehörigen Reflexionslichtbündels (54a, 54b) bestimmt wird.

7.  Verfahren nach einem der vorhergehenden Ansprüche, **dadurch gekennzeichnet, dass** das Messlichtbündel (34) in einen Teilbereich einer Eintrittspupille (52) des Objektivs (12) geleitet wird, der gegenüber der Mitte der Eintrittspupille (52) versetzt ist.

8.  Mikroskop, umfassend:

einen Probenraum (14) mit einem Deck- oder Tragglas (24) und zwei optischen Medien (26, 28),

ein dem Probenraum (14) zugewandtes Objektiv (12),

zwei teilreflektierende Grenzflächen, die in dem Probenraum (14) in unterschiedlichen Abständen von dem Objektiv (12) angeordnet und dadurch gebildet sind, dass die beiden optischen Medien (26, 28) in dem Probenraum (14) an zwei entgegengesetzte Oberflächen (64, 68) des Deck- oder Tragglases (24) grenzen, und

eine Einrichtung (30) zur Bestimmung der Dicke des Deck- oder Tragglases (24),

wobei die Einrichtung (30) ausgebildet ist, ein Messlichtbündel (34) durch das Objektiv (12) unter schrägem Einfall auf das Deck- oder Tragglas (24) zu lenken,

die Einrichtung (30) ausgebildet ist, zwei räumlich voneinander getrennte Reflexionslichtbündel (54a, 54b) zu erzeugen, in dem das Messlichtbündel (34) jeweils zum Teil an den beiden Grenzflächen reflektiert wird,

die Einrichtung (30) einen positionssensitiven Detektor (60) aufweist und ausgebildet ist, die beiden Reflexionslichtbündel (54a, 54b) durch das Objektiv (12) zu empfangen und auf den positionssensitiven Detektor (60) zu leiten, der positionssensitive Detektor (60) ausgebildet ist, die Einfallsorte der beiden Reflexionslichtbündel (54a, 54b) zu erfassen, und

die Einrichtung (30) eine Ermittlungseinheit umfasst, die ausgebildet ist, auf Grundlage der erfassten Einfallsorte der beiden Reflexionslichtbündel (54a, 54b) die Dicke des Deck- oder Tragglases (24) zu ermitteln, **dadurch gekennzeichnet, dass** die Einrichtung (30) ausgebildet ist, die beiden Reflexionslichtbündel (54a, 54b) gleichzeitig auf den positionssensitiven Detektor (60) zu leiten, und die Ermittlungseinheit ausgebildet ist, die Dicke des Deck- oder Tragglases (24) anhand des gegenseitigen Abstandes der unterschiedlichen Einfallsorte der beiden Reflexionslichtbündel (54a, 54b) zu ermitteln.

9. Mikroskop (10, 78) nach Anspruch 8, **dadurch gekennzeichnet, dass** die Einrichtung (30) eine Aperturblende (38) mit einer Blendenöffnung (39) aufweist, die dezentriert mit Abstand zur optischen Achse (O3) des Objektivs (12) angeordnet ist.

10. Mikroskop nach Anspruch 8 oder 9, **dadurch gekennzeichnet, dass** die Einrichtung (30) eine Lichtquelle (32) hat, die das Messlichtbündel (34) im Infrarot-Wellenlängenbereich emittiert.

11. Mikroskop nach einem der Ansprüche 8 bis 10, bei dem der positionssensitive Detektor (60) ein zweidimensionaler Detektor ist.

12. Mikroskop nach einem der Ansprüche 8 bis 11, bei dem der positionssensitive Detektor (60) ein eindimensionaler Detektor ist.

## Claims

1. A method for determining the thickness of a cover or support glass (24) in a microscope (10, 78) having an objective facing a sample chamber (14),

   wherein in the sample chamber (14) two optical media (26, 28) are adjacent to two opposite surfaces (64, 68) of the cover or support glass (24) thereby forming two partially reflecting interfaces located at different distances from the objective (12),
   a measuring light beam (34) is directed through the objective (12) under oblique incidence onto the cover or support glass (24),
   two spatially separated reflection light beams (54a, 54b) are generated by partially reflecting the measuring light beam (34) on each of the two interfaces,
   the two reflection light beams (54a, 54b) are received by the objective (12) and directed to a position-sensitive detector (60),
   the incidence locations of the two reflection light beams (54a, 54b) are detected on the position-sensitive detector (60), and
   the thickness of the cover or support glass (24) is determined on the basis of the detected incidence locations of the two reflection light beams (54a, 54b), **characterized in that** the two reflection light beams (54a, 54b) are simultaneously directed onto the position-sensitive detector (60) and the thickness of the cover or support glass (24) is determined on the basis of the mutual spacing of the different incidence locations of the two reflection light beams (54a, 54b).

2. The method according to claim 1, **characterized in that** the determined thickness of the cover or support glass (24) corresponds to an optical thickness.

3. The method according to claim 2, **characterized in that** a mechanical thickness of the cover or support glass (24) is determined on the basis of the optical thickness, taking into account the refractive indices of the cover or support glass (24) and of the optical medium (26) adjacent to both the objective (12) and the cover or support glass (24).

4. The method according to claim 3, **characterized in that** the mechanical thickness of the cover or support glass (24) is additionally determined taking into account the numerical aperture of the measuring light beam (34).

5. The method according to one of the preceding claims, **characterized in that** a measurement pattern is generated by the measuring light beam (34) on each of the two interfaces, which is imaged onto the position-sensitive detector (60) by the associated reflection light beam (54a, 54b).

6. The method according to claim 5, **characterized in that** the respective measurement pattern imaged on the position-sensitive detector (60) is detected in the form of a spatial intensity distribution (V) from which the incidence location of the associated reflection light beam (54a, 54b) is determined.

7. The method according to any one of the preceding claims, **characterized in that** the measuring light beam (34) is guided into a partial region of an entrance pupil (52) of the objective (12) which is offset with respect to the center of the entrance pupil (52).

8. A microscope, comprising:

a sample chamber (14) with a cover or support glass (24) and two optical media (26, 28),
an objective (12) facing the sample chamber (14),
two partially reflecting interfaces arranged in the sample chamber (14) at different distances from the objective (12) and formed by the two optical media (26, 28) in the sample chamber (14) adjoining two opposite surfaces (64, 68) of the cover or support glass (24), and a device (30) for determining the thickness of the cover or support glass (24),
wherein the device (30) is configured to direct a measuring light beam (34) through the objective (12) under oblique incidence onto the cover or support glass (24),
the device (30) is configured to generate two reflection light beams (54a, 54b) spatially separated from each other, in which the measuring light beam (34) is partially reflected on each of the two interfaces,
the device (30) has a position-sensitive detector (60) and is configured to receive the two reflection light beams (54a, 54b) through the objective (12) and to direct them to the position-sensitive detector (60),
the position-sensitive detector (60) is configured to detect the incidence locations of the two reflection light beams (54a, 54b), and
the device (30) comprises a determination unit which is configured to determine the thickness of the cover or support glass (24) on the basis of the detected incidence locations of the two reflection light beams (54a, 54b), **characterized in that** the device (30) is configured to direct the two reflection light beams (54a, 54b) simultaneously to the position-sensitive detector (60), and
the determination unit is configured to determine the thickness of the cover or support glass (24) on the basis of the mutual distance of the different incidence locations of the two reflection light beams (54a, 54b).

9. The microscope (10, 78) according to claim 8, **characterized in that** the device (30) comprises an aperture diaphragm (38) having an aperture opening (39) that is off-centered at a distance from the optical axis (O3) of the objective (12).

10. The microscope according to claim 8 or 9, **characterized in that** the device (30) has a light source (32) emitting the measuring light beam (34) in the infrared wavelength range.

11. The microscope of any one of claims 8 to 10, wherein the position-sensitive detector (60) is a two-dimensional detector.

12. The microscope of any one of claims 8 to 11, wherein the position-sensitive detector (60) is a one-dimensional detector.

## Revendications

1. Procédé de détermination de l'épaisseur d'une lamelle couvre-objet ou d'une lame porte-objet en verre (24) dans un microscope (10, 78) qui comporte un objectif dirigé vers un espace d'échantillon (14),

deux milieux optiques (26, 28) bordant, dans l'espace d'échantillon (14), deux surfaces opposées (64, 68) de la lamelle couvre-objet ou de la lame porte-objet en verre (24) et formant ainsi deux interfaces partiellement réfléchissantes qui sont disposées à des distances différentes de l'objectif (12),
un faisceau de lumière de mesure (34) étant dirigé obliquement de manière incidente à la lamelle couvre-objet ou la lame porte-objet en verre (24) à travers l'objectif (12),
deux faisceaux de lumière de réflexion (54a, 54b) séparés spatialement l'un de l'autre étant générés en ce que le faisceau de lumière de mesure (34) est partiellement réfléchi au niveau de chacune des deux interfaces,
les deux faisceaux de lumière de réflexion (54a, 54b) étant reçus par l'objectif (12) et dirigés vers un détecteur (60) sensible en termes de position,
les sites d'incidence des deux faisceaux de lumière de réflexion (54a, 54b) étant détectés sur le détecteur (60) sensible en termes de position, et

l'épaisseur de la lamelle couvre-objet ou de la lame porte-objet (24) étant déterminée sur la base des sites d'incidence détectés des deux faisceaux de lumière de réflexion (54a, 54b),

**caractérisé en ce que** les deux faisceaux de lumière de réflexion (54a, 54b) sont guidés simultanément vers le détecteur (60) sensible en termes de position et l'épaisseur de la lamelle couvre-objet ou de la lame porte-objet en verre (24) est déterminée à l'aide de la distance mutuelle entre les différents sites d'incidence des deux faisceaux de lumière de réflexion (54a, 54b).

2. Procédé selon la revendication 1, **caractérisé en ce que** l'épaisseur déterminée de la lamelle couvre-objet ou de la lame porte-objet en verre (24) correspond à une épaisseur optique.

3. Procédé selon la revendication 2, **caractérisé en ce qu'**une épaisseur mécanique de la lamelle couvre-objet ou de la lame porte-objet en verre (24) est déterminée sur la base de l'épaisseur optique avec prise en compte de l'indice de réfraction de la lamelle couvre-objet ou de la lame porte-objet en verre (24) et du milieu optique (26) qui borde aussi bien l'objectif (12) que la lamelle couvre-objet ou la lame porte-objet en verre (24).

4. Procédé selon la revendication 3, **caractérisé en ce que** l'épaisseur mécanique de la lamelle couvre-objet ou de la lame porte-objet en verre (24) est en outre déterminée avec prise en compte de l'ouverture numérique du faisceau de lumière de mesure (34).

5. Procédé selon l'une des revendications précédentes, **caractérisé en ce que** le faisceau de lumière de mesure (34) génère au niveau de chacune des deux interfaces un motif de mesure qui est reproduit sur le détecteur (60) sensible en termes de position par le faisceau de lumière de réflexion (54a, 54b) associé.

6. Procédé selon la revendication 5, **caractérisé en ce que** le motif de mesure respectif, reproduit sur le détecteur (60) sensible en termes de position, est détecté sous la forme d'une distribution d'intensité spatiale (V) à partir de laquelle le site d'incidence du faisceau de lumière de réflexion (54a, 54b) associé est déterminé.

7. Procédé selon l'une des revendications précédentes, **caractérisé en ce que** le faisceau de lumière de mesure (34) est dirigé dans une sous-zone d'une pupille d'entrée (52) de l'objectif (12) qui est décalée par rapport au centre de la pupille d'entrée (52) .

8. Microscope comprenant :

un espace d'échantillon (14) pourvu d'une lamelle couvre-objet ou d'une lame porte-objet en verre (24) et de deux milieux optiques (26, 28),
un objectif (12) dirigé vers l'espace d'échantillon (14),
deux interfaces partiellement réfléchissantes, qui sont disposées dans l'espace d'échantillon (14) à des distances différentes de l'objectif (12) et qui sont formées en ce que les deux milieux optiques (26, 28) dans l'espace échantillon (14) bordent deux surfaces opposées (64, 68) de la lamelle couvre-objet ou de la lame porte-objet en verre (24), et
un dispositif (30) destiné à déterminer l'épaisseur de la lamelle couvre-objet ou de la lame porte-objet en verre (24),
le dispositif (30) étant conçu pour diriger un faisceau de lumière de mesure (34) obliquement de manière incidente à la lamelle couvre-objet ou à la lame porte-objet en verre (24) à travers l'objectif (12),
le dispositif (30) étant conçu pour générer deux faisceaux de lumière de réflexion (54a, 54b) séparés spatialement l'un de l'autre, le faisceau de lumière de mesure (34) étant partiellement réfléchi au niveau des deux interfaces,
le dispositif (30) comportant un détecteur (60) sensible en termes de position et étant conçu pour recevoir les deux faisceaux de lumière de réflexion (54a, 54b) à travers l'objectif (12) et pour les diriger vers le détecteur (60) sensible en termes de position,
le détecteur (60) sensible en termes de position étant conçu pour détecter les sites d'incidence des deux faisceaux de lumière de réflexion (54a, 54b) et
le dispositif (30) comprenant une unité de détermination qui est conçue pour déterminer l'épaisseur de la lamelle couvre-objet ou de la lame porte-objet en verre (24) sur la base des sites d'incidence détectés des deux faisceaux de lumière de réflexion (54a, 54b),
**caractérisé en ce que**
le dispositif (30) est conçu pour guider simultanément les deux faisceaux de lumière de réflexion (54a, 54b) sur le détecteur (60) sensible en termes de position, et

l'unité de détermination est conçue pour déterminer l'épaisseur de la lamelle couvre-objet ou de la lame porte-objet en verre (24) sur la base de la distance mutuelle entre les différents sites d'incidence des deux faisceaux de lumière de réflexion (54a, 54b).

9. Microscope (10, 78) selon la revendication 8, **caractérisé en ce que** le dispositif (30) comporte un diaphragme (38) pourvu d'une ouverture (39) qui est disposée de manière décentrée à distance de l'axe optique (03) de l'objectif (12).

10. Microscope selon la revendication 8 ou 9, **caractérisé en ce que** le dispositif (30) comporte une source de lumière (32) qui émet le faisceau de lumière de mesure (34) dans la gamme de longueurs d'onde des infrarouges.

11. Microscope selon l'une des revendications 8 à 10, dans lequel le détecteur (60) sensible en termes de position est un détecteur bidimensionnel.

12. Microscope selon l'une des revendications 8 à 11, dans lequel le détecteur (60) sensible en termes de position est un détecteur unidimensionnel.

Figur 1

Figur 2

Figur 3

Figur 4

Figur 5

Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1988417 A1
- US 2017013186 A1

**In der Beschreibung aufgeführte Nicht-Patentliteratur**

- **M. KURT.** Die wissenschaftliche und angewandte Photographie. *Die Mikrophotographie,* vol. 10, 171
- **M. KURT.** Die wissenschaftliche und angewandte Photographie. *Die Mikrophotographie,* vol. 10, 172